Europäisches Patentamt

(19) European Patent Office

Office européen des brevets

(11) Publication number: **0 136 776**
**B1**

(12) **EUROPEAN PATENT SPECIFICATION**

(45) Date of publication of patent specification: **13.04.88**

(21) Application number: **84304717.6**

(22) Date of filing: **11.07.84**

(51) Int. Cl.⁴: **G 11 B 25/04**

(54) **Linear motor.**

(30) Priority: **12.07.83 US 512876**

(43) Date of publication of application:
**10.04.85 Bulletin 85/15**

(45) Publication of the grant of the patent:
**13.04.88 Bulletin 88/15**

(84) Designated Contracting States:
**BE DE FR GB IT NL**

(56) References cited:
**US-A-3 896 319**
**US-A-4 001 889**

**IBM TECHNICAL DISCLOSURE BULLETIN, vol.
23, no. 1, June 1980 D.R. JOHNSON et al.
"Tapered magnet voice coil motor" pages
315-316**

(73) Proprietor: **MEMOREX CORPORATION
San Tomas at Central Expressway
Santa Clara California 95052 (US)**

(72) Inventor: **Morris, Frank Ivan
5816 South View Drive
San Jose California 95138 (US)**

(74) Representative: **Kirby, Harold Douglas Benson
et al
G.F. Redfern & Company Marlborough Lodge 14
Farncombe Road
Worthing West Sussex BN11 2BT (GB)**

Courier Press, Leamington Spa, England.

## Description

This invention relates to linear motors and to methods of fabricating such motors.

US—A—3 896 319 discloses a linear motor including a housing supporting a slotted core, at least part of which is surrounded by a coil. An armature is cantilevered to the coil and magnets are supported by the housing. A diametric slot in the magnets is aligned with the slot in the core to permit the armature to reciprocate along the axis of the coil within the slots.

### Background, problems

The present invention concerns magnetic disc drive (DD) assemblies and particularly the structure of voice coil motors for DD actuators.

Workers in the art of making and using magnetic disc drives for storage of digital data for computer and other applications are attuned to today's thrust to make these more cost-effective. The present invention relates to improvements in the actuator mechanism and, more particularly, in the voice coil motor portion thereof in order to enhance actuator efficiency and access time.

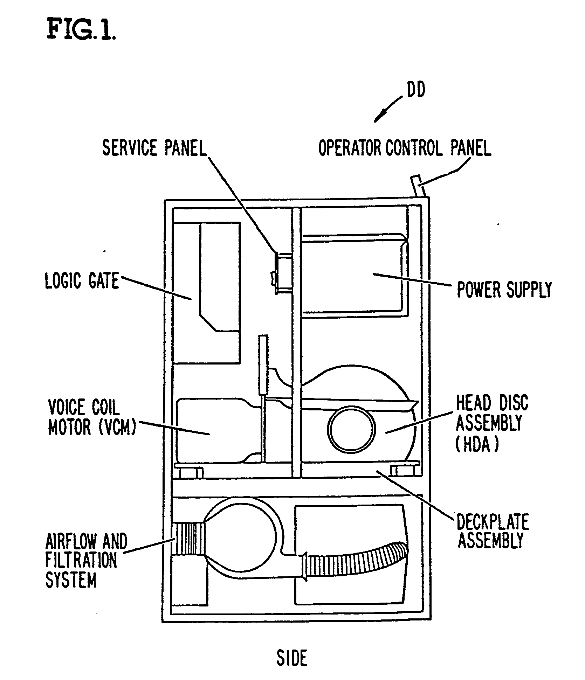

### Context of invention, disc drive, VC motor, Figs. 1—3

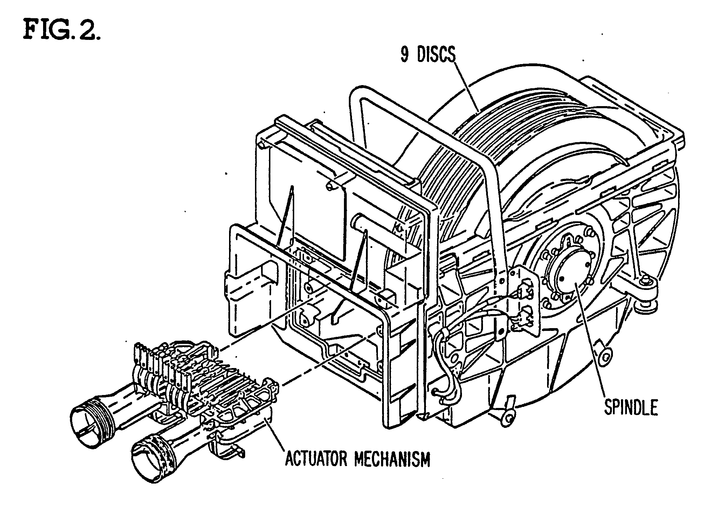

Fig. 1 shows a very schematic side-view of a disc drive (DD) module of improved construction. Of particular interest here is the head-disc assembly (HDA) shown in more detail in Fig. 2, with the (dual) actuators therefor being driven by an associated voice coil motor (VCM) as workers in the art will understand. Both the HDA and VCM are mounted as part of a "deck plate" assembly as schematically indicated. The deck plate assembly will be understood as comprising a deck plate mounting the dual-voice coil motor (VCM), the drive-blower motor, the drive belt and its cover, and the HDA mounting hardware.

This HDA is characterized by a dual-actuator mechanism, including a pair of actuators each capable of covering one-half of the HDA storage area and being adapted, as workers will understand, to position and move a set (preferably 16) of read/write transducers across prescribed respective disc surfaces.

The dual-actuator assembly comprises two carriages, each carrying four head arm assemblies. Each head arm assembly carries four read/write heads. The carriage is fitted with a voice coil which moves in the magnetic air gap of the VCM. Note that, preferably, each actuator here carries a 16 thin-film heads, one for servo use and the other 15 for read/write functions. The actuators are separately addressable and also include a portion of the HDA electronics.

Preferably this is a Winchester type HDA consisting of nine 14" magnetic discs installed on a common horizontal spindle with two actuators. The spindle will be rotated in a known fashion (e.g., at a nominal 3600 rpm, as controlled by a drive-blower motor) allowing the heads to fly slightly above disc surfaces when the discs are rotating, and also insuring that the HDA is free of contaminating particles. This drive-blower motor (mounted on the deck plate as indicated) is an integral part of both the HDA and the air flow-filtration system. The HDA should be sealed and include a set of crash stop assemblies for each actuator.

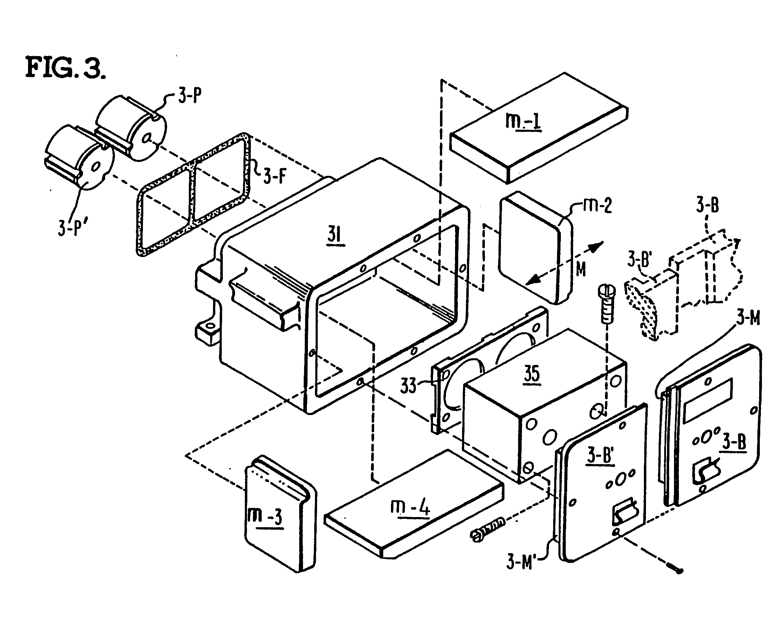

The VCM itself (see Fig. 3) is—according to my invention—made up of a "ductile iron" housing (31), an aluminum flux collector spacer (33), a "ductile iron" flux collector (35), two pole pieces (3-P and 3-p') of "1018" rolled steel, a top and bottom magnet (m-1, m-4), two side magnets (m-2, m-3), and two "back magnets" (3-M, 3-M'), each bonded to a respective back plate (3-B, 3-B').

The magnets are magnetized in a direction (indicated in Fig. 3) to concentrate the flux in the flux collector 35 and drive it through the air gap via the pole pieces. The magnet area and thickness are designed to ensure that the pole pieces are "saturated" (i.e., the average magnetic induction in the pole pieces is greater than 1.8 tesla). This ensures that there is little or no change in the flux density in the gap due to the demagnetizing effects of operating temperature variation and/or high voice coil currents.

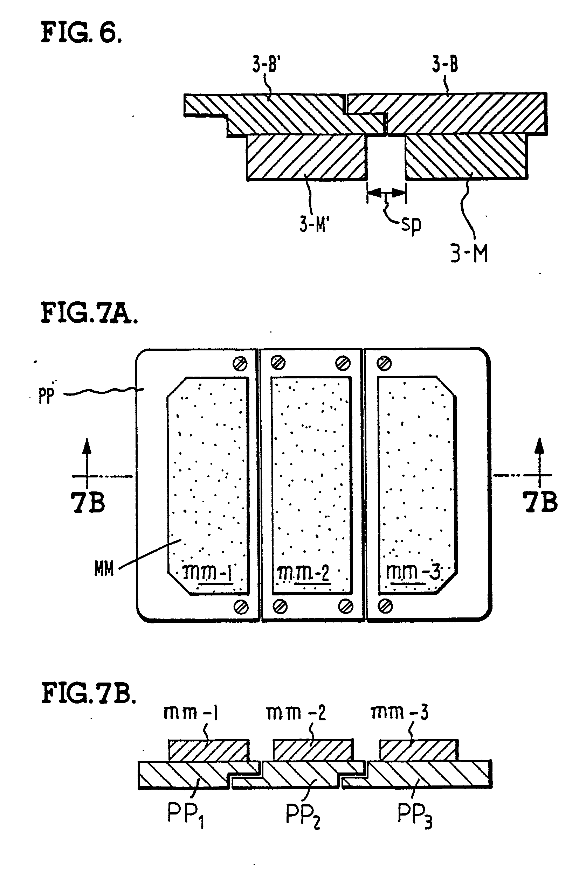

### The problem, Figs. 3, 5

The arrangement in Fig. 3 represents an efficient VC motor for such uses, one exhibiting superior efficiency and power and decreased "access time". Here, workers will be surprised to see that the back magnet and associated mounting plate has been "split". The more conventional approach (for such a "ceramic magnet array") would be to use a single back magnet on a single mounting plate.

Fig. 5 will be recognized as a Demagnetization curve, plotting coercive force (H) vs. flux density (B) for "standard" conditions (e.g., 20°C, etc.) for such a VCM with single back magnet (curve DM, assume a Barium ferrite magnet), with a typical associated "open circuit load line" OL having a slope (permeance) of 0.31. (Note one must magnetize outside the VCM assembly). The "operating (VCM) load line" LL intersects curve DM at a flux density value of A; this may be conceptualized as the flux density available to a "conventional" VCM assembly with a one-piece back magnet. (e.g., assume Barium ferrite or like ceramic magnet, such as "8" by Colt Industries, or "8-B" for higher remanance).

The intersection of load line OL (Fig. 5) with the demagnetization curve for such a magnet, shows that when the back magnet assembly is bolted to the VCM assembly there will be a loss in flux density.

Workers will recognize that a VCM arrangement of magnets and flux carriers like that of Fig. 3 implies the use of ceramic magnets—e.g., as opposed to using an ALNICO magnet, involving higher cost, unstable (Co) sources, etc. Thus, the invention will be limited to instances employing such ceramic magnets.

Splitting the back magnet, as here taught, will be seen to increase flux density—in Fig. 5, to value B, the intersection of "operating load line" LL with modified demagnetization curve DM' associated with "split magnets".

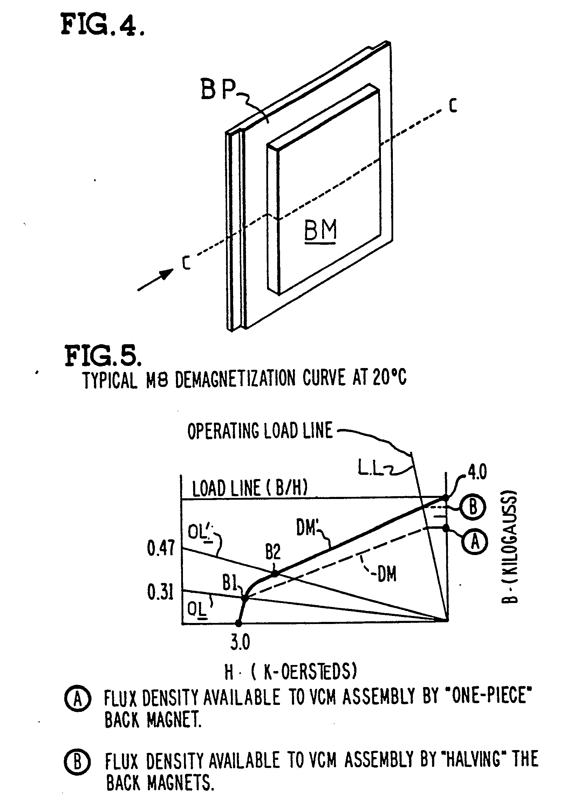

Proposed solution: (Fig. 4)

It occurred that one might derive some advantage by subdividiing the conventional single back magnet—for instance, by halving it along a cutting C—C, as is indicated for a single back-magnet BM on a single back plate BP in Fig. 4. It was further theorized that one might separate these severed magnet sections and mount each on its own separate back plate. Thus evolved the split magnet arrangement of Fig. 3, as further discussed in Ex. I below.

Brief description of the drawings

These and other features and advantages of the present invention will be appreciated by workers as they become better understood by reference to the following detailed description of the present preferred embodiments which should be considered in conjunction with the accompanying drawings, wherein like reference symbols denote like elements:

Fig. 1 is a very schematic side view of an exemplary disc drive arrangement of the type contemplated; while

Fig. 2 is an enlarged side view of an associated disc file with dual-actuator mechanism;

Fig. 3 is an enlarged, exploded view of a contemplated voice coil motor assembly for such an actuator;

Fig. 4 illustrates a single back magnet in plan view; as proposed for "halving"; while Fig. 6 shows two such halves mounted together in end-view, as in Fig. 3; whereas

Figs. 7A, 7B similarly illustrate cutting a back magnet into thirds; and

Fig. 5 is an exemplary "Demagnetization" curve indicating representative effects of such "halving".

Description of the preferred embodiments
General description, background

Figs. 5, 3, 6, and Ex. I schematically illustrate an actuator motor constructed according to principles of this invention. This, and other related motor and actuator means discussed herein, will generally be understood as constructed and operating as presently known in the art, except where otherwise specified. And, except as otherwise specified, all materials, methods and devices and apparatus herein will be understood as implemented by known expedients according to present good practice.

Ex. I: Figs. 3, 5, 6

Ex. I will be understood as following the above-indicated concept of subdividing the (conventional, single) back magnet (cf. Fig. 4), resulting in a "split magnet" array as in Figs. 3, 6. A preferred mode of "splitting" is indicated in Fig. 6 where each magnet-half 3-M, 3-M' is mounted on its own respective, back-plate 3-B, 3-B'. The back-plates are then abutted and fastened to their housing (bolted), leaving magnets typically in "virtual abutment (separated by an infinitesimal spacing "sp"; e.g., a few mils or less, as manufacturing tolerance). Preferably, the back-plates are abutted together in precise alignment—e.g., as indicated at the "dovetail-join" line in Fig. 6. Each magnet is conventionally bonded to its back-plate (e.g., with epoxy). The plates may comprise "10-10 steel" or any conventional low-reluctance material.

The back magnets are identical and comprise a good ferro-magnetic ceramic, such as Barium ferrite (e.g. "8-B" by Colt Industries). This design is optimized for such ceramic magnets (e.g., in respect of thermal stability, with good "flux saturation" maintained as described above).

Results

One is pleased and surprised to discover that this "halving" operation results in an improved load line as indicated in Fig. 5 at OL', with improved slope of 0.47. This results in a flux-meter reading in the working gap of the VCM of the order of $3.1 \times 10^5$ Maxwell turns, where before only about $2.6 \times 10^5$ Maxwell turns would be typical (i.e., before "halving" the back magnets).

As workers will understand, this means more actuator power and higher efficiency for a given VCM current value—thus improving access time: a most important feature.

Further improvements

As workers in the art will doubtless appreciate, one may further subdivide such back-magnets (e.g., into thirds, quarters, etc.) to get a prescribed improvement in magnetic characteristic (better open circuit load line), consistent with acceptable increase in fabrication time and expense and with some sacrifice in structural rigidity.

Thus, for example, one may also subdivide the back magnet into "thirds" as indicated in Figs. 7A, 7B (Compare Figs. 3, 4 and 6). Here, a representative ceramic back magnet will be understood as subdivided into three (3) identical portions (mm-1, mm-2, mm-3), each bonded to a respective back plate (cf. $PP_1$, $PP_2$, and $PP_3$, respectively) as before, with the plates joined to abut as before to present a composite back plate PP mounting the resultant thirds in virtual abutment as a composite tri-partite magnet MM. Other such magnets are obviously apt for such subdivision with like results.

Conclusion

It will be understood that the preferred embodiments described herein are only exemplary, and that the invention is capable of many modifications and variations in construction, arrangement and use without departing from the spirit of the invention. For example, the means and methods disclosed herein are also applicable to related VC motors for other disc drivers and other actuator systems and the like. Also, the invention is applicable in certain aspects for improving other related motors and/or for providing positioning motive means as required for other forms of recording and/or reproducing systems, such as those in which data is recorded and reproduced optically.

The above examples of possible variations of the present invention are merely illustrative. Accordingly, the present invention is to be considered as including all possible modifications and variations coming within the scope of the invention as defined by the appended claims.

## Claims

1. A linear motor comprising a housing (31), a flux collector (35), a plurality of magnets (m1—m4, 3-M, 3M'), including a back magnet (3-M, 3-M') and a reciprocatable armature, characterised in that the back magnet is formed of a ceramic magnet slab which has been split into two portions (3-M, 3-M') and re-combined along a common magnet plane (Sp) with the two portions substantially in contact along said plane.

2. A linear motor according to Claim 1, characterised in that each portion is mounted on its own backing plate (3-B, 3-B').

3. A linear motor according to Claim 1 or Claim 2, wherein the two magnet portions are identical.

4. A linear motor according to Claim 1, wherein the slab is split into three portions (mm-1, mm-2, mm-3).

5. A linear motor according to Claim 2, wherein the backing plates are disposed in aligned abutment along a dovetail join.

6. A method of fabricating an improved actuator motor for a disc drive actuator, this motor including a back magnet comprising a slab of ferro-magnetic ceramic; the method including: splitting this slab at least once to form an array of identical magnet parts, and mounting the magnet parts so that they are substantially in contact along a magnet plane or planes.

## Patentansprüche

1. Linearmotor mit einem Gehäuse (31), einem Flußleitkörper (35), einer Mehrzahl von Magneten (m1—m4, 3-M, 3M') einschließlich einem Rückmagneten (3-M, 3-M'), und mit einem hin- und herbewegbaren Anker, dadurch gekennzeichnet, daß der Rückmagnet aus einer keramischen Magnetplatte besteht, die in zwei Teile (3-M, 3-M') gespalten und entlang einer gemeinsamen Magnetebene (Sp) wieder zusammengefügt ist, wobei die beiden Teile sich mit der Ebene im annähernden Kontakt befinden.

2. Linearmotor nach Anspruch 1, dadurch gekennzeichnet, daß jeder Teil auf einer eigenen Tragplatte (3-B, 3-B') befestigt ist.

3. Linearmotor nach Anspruch 1 oder 2, dadurch gekennzeichnet, daß die beiden Magnetteile identisch sind.

4. Linearmotor nach Anspruch 1, dadurch gekennzeichnet, daß die Platte in drei Teile (mm-1, mm-2, mm-3) gespalten ist.

5. Linearmotor nach Anspruch 1, dadurch gekennzeichnet, daß die Tragplatten sich entlang einer überlappenden oder gezinkten Verbindung ausgerichtet berühren.

6. Verfahren zur Herstellung eines verbesserten Betätigungsmotors für ein Plattenantriebs-Betätigungsglied, welcher Motor einen Rückmagneten aus einer Platte ferromagnetischen Keramikmaterials enthält, dadurch gekennzeichnet, daß die Platte mindestens einmal gespalten wird, um einen Anzahl von identischen Magnetteilen zu bilden, und daß die magnetischen Teile derart montiert werden, daß sich im annähernden Kontakt entlang einer Magnetebene oder Magnetebenen befinden.

## Revendications

1. Moteur linéaire formé d'un boîtier (31), d'un collecteur de flux (35), d'un ensemble d'aimants (m1—m4, 3-M, 3M') avec un aimant arrière (3-M, 3-M') et une armature à mouvement alternatif, moteur caractérisé en ce que l'aimant arrière est constitué par une pièce magnétique en céramique subdivisée en deux parties (3-M, 3-M') et recombinée suivant un plan d'aimants communs (Sp), les deux parties étant essentiellement en contact suivant ce plan.

2. Moteur linéaire selon la revendication 1, caractérisé en ce que chaque partie est montée sur sa propre plaque arrière (3-B, 3-B').

3. Moteur linéaire selon la revendication 1 ou la revendication 2, caractérisé en ce que les deux parties d'aimant sont identiques.

4. Moteur linéaire selon la revendication 1, caractérisé en ce que le bloc est divisé en trois parties (mm-1, mm-2, mm-3).

5. Moteur linéaire selon la revendication 2, caractérisé en ce que les plaques arrière sont alignées en butée suivant un joint en queue d'aronde.

6. Procédé de fabrication d'un moteur d'organe de manoeuvre perfectionné pour un organe de manoeuvre d'un entraînement de disque, ce moteur comportant un aimant arrière formé d'un bloc de matière céramique ferromagnétique, procédé caractérisé en ce qu'on subdivise ce bloc au moins une fois pour former un réseau de parties d'aimant identiques et on monte les parties d'aimant de façon qu'elles soient essentiellement en contact suivant un plan d'aimant ou des plans d'aimant.

# FIG.1.

DD

SERVICE PANEL

OPERATOR CONTROL PANEL

LOGIC GATE

POWER SUPPLY

VOICE COIL
MOTOR (VCM)

HEAD DISC
ASSEMBLY
(HDA)

DECKPLATE
ASSEMBLY

AIRFLOW AND
FILTRATION
SYSTEM

SIDE

1

# FIG.2.

9 DISCS

SPINDLE

ACTUATOR MECHANISM

FIG. 3.

0 136 776

# FIG.4.

BP

BM

C

C

# FIG.5.

TYPICAL M8 DEMAGNETIZATION CURVE AT 20°C

OPERATING LOAD LINE

L.L

4.0

LOAD LINE ( B/H )

B

OL'

DM'

A

0.47

B2

B · (KILOGAUSS)

-DM

0.31

B1

OL

3.0

H · ( K-OERSTEDS)

(A) FLUX DENSITY AVAILABLE TO VCM ASSEMBLY BY "ONE-PIECE" BACK MAGNET.

(B) FLUX DENSITY AVAILABLE TO VCM ASSEMBLY BY "HALVING" THE BACK MAGNETS.

## FIG. 6.

3-B'          3-B

3-M'          sp          3-M

## FIG. 7A.

PP

7B          7B

MM          mm-1          mm-2          mm-3

## FIG. 7B.

mm-1          mm-2          mm-3

PP₁          PP₂          PP₃